# EUROPEAN PATENT SPECIFICATION

(11) **EP 3 535 105 B1**
(45) Date of publication and mention of the grant of the patent: **07.10.2020**
(21) Application number: 17791411.6
(22) Date of filing: 30.10.2017
(51) Int. Cl.: B29C 45/27, B29C 45/28

(54) **HOT RUNNER INJECTION MOLDING APPARATUS AND ASSOCIATED FLEXIBLE ACTUATOR TO VALVE PIN CONNECTION**
HEISSKANAL-SPRITZGIESSVORRICHTUNG UND ZUGEHÖRIGER FLEXIBLER AKTUATOR FÜR VENTILSTIFTVERBINDUNG
APPAREIL DE MOULAGE PAR INJECTION À CANAL CHAUFANT ET ACTIONNEUR FLEXIBLE ASSOCIÉ POUR CONNEXION DE TIGE DE SOUPAPE

(30) Priority: 02.11.2016 US 201662416402 P
(43) Date of publication of application: 11.09.2019
(73) Proprietor: Otto Männer Innovation GmbH, 79353 Bahlingen a.K. (DE)
(72) Inventor: SPULLER, Sven, 79362 Forchheim (DE); OLARU, Gheorge, 79104 Freiburg (DE); STULZ, Christopher, 79353 Bahlingen (DE)
(74) Representative: Dunkel, Christoph
(86) International application number: PCT/EP2017/077811
(87) International publication number: WO 2018/083068

(56) References cited:
- DE-A1- 19 532 978
- JP-A- 2006 035 686

## Description

### TECHNICAL FIELD

The present invention relates to an injection molding hot runner system including a flexible connection between an actuator and the associated valve pin(s).

### BACKGROUND

Injection molding hot runner systems including movable valve pins are well known. Unlike hot runner systems that use thermal gating, hot runner systems using valve pins provide a better control of the molding process and also ensure higher quality molded parts, when considering the gating marks left on the molded parts. Patent document DE 195 32 978 A1 discloses a hot runner system including a flexible connection between the actuator and the valve pin.

It is also known that problems related to the wear of the valve pins are difficult to predict and to solve.

The wear of the valve pins could happen either a) at the tip portion of the valve pins in an area that is close to the hot runner nozzle tip, b) in an area of the valve pins that is used for the alignment of the valve pins in the nozzle or near a mold gate, or c) in an area of the valve pins that is related to the valve pin bushing that is usually positioned near the nozzle head or near the manifold melt channels.

There is a need to reduce the wear of the valve pins and associated wear-vulnerable components, including the valve pins, the valve bushings, and the valve pin guiding elements.

### SUMMARY

A hot runner injection molding apparatus according to the invention comprises: a manifold including an inlet and a plurality of outlets; at least one hot runner nozzle coupled to the manifold, where each nozzle defines a melt channel and where each nozzle includes a movable valve pin configured to control a flow of a molten material from each nozzle into a mold cavity by opening and closing of a mold gate; and an actuation system including an actuator which creates a movement along a first axis "A", and a valve pin which is moveable along a second axis "B" wherein the second axis "B" is angled with respect to the first axis "A". The actuation system further includes a plurality of force transmission components, wherein the force transmission components are movably connected to each other, wherein the first force transmission component is connected to the actuator and the last force transmission component is connected to the moveable valve pin and the force transmission components are substantially located and guided within an area of the channel, which is substantially not parallel to axis A or axis B, wherein the force transmission components are connected via ball head connection.

The actuation system of the hot runner injection molding apparatus according to the invention provides reduced wear of the valve pins and associated wear-vulnerable components by providing an alternative actuation mechanism system providing a flexible connection between an actuator and the associated valve pin(s).

In one development of the hot runner injection molding apparatus the area of the channel, which is substantially not parallel to axis A or axis B, is substantially the whole channel. Therefore the force transmission components are substantially located and guided in an area of the channel, which is substantially not parallel to axis A or axis B. Also the direction of the transmission force is translated from axis "A" to axis "B" within this area of the channel.

In one development of the hot runner injection molding apparatus the force transmission components translate the actuator force to the valve pin. The force transmission components are thereby guided within the channel.

In one development of the hot runner injection molding apparatus the force transmission components translate the actuator force to move the valve pin in a first direction to open a mold gate to allow the molten material flowing into the mold cavity. Similarly, in one development of the hot runner injection molding the force transmission components translate the actuator force to move the valve pin in a second direction opposite to the first direction to close a mold gate to stop molten material flowing into the mold cavity. In one development of the hot runner injection molding apparatus the force transmission components translate the actuator force to move the valve pin in a position between the open and closed position.

In such embodiments the actuator element imposes push and/ or pull forces on the force transmission components which in turn push and/ or pull the valve pin with regard to the mold gate to position the valve pin in an open or closed position or in a position between the open and closed position.

In one development of the hot runner injection molding apparatus the overall length of the movably connected force transmission components is substantially constant in all operating positions of the valve pin. A substantially constant overall length of the force transmission components enables precise positioning of the valve pin in particular with regard to the mold gate.

In one development of the hot runner injection molding apparatus the overall length of the movably connected force transmission components is substantially constant in all operating positions of the actuator. A substantially constant overall length of the force transmission components enables a precise control of the movements of the valve pin via the actuator.

In one development of the hot runner injection molding apparatus the movably connected force transmission components are non-compressible in the moving direction. Thus push forces are transmitted precisely from the actuator to the valve pin.

In one development of the hot runner injection molding apparatus the movably connected force transmission components are non-stretchable in the moving direction. Also such an embodiment enables a precise transmission of pull forces from the actuator to the valve pin.

In one development of the hot runner injection molding the contact surface of the force transmission components is increased by using a concave geometry on a first force transmission component touching a convex geometry on a second force transmission component. In such an embodiment the contact area between force transmission components is increased. This design enables a transmission of high push forces via the force transmission components for example from the actuator to the valve pin.

In one development of the hot runner injection molding apparatus the force transmission components are connected via ball head connection. A ball head connection provides a flexible coupling with by comparison large contact areas between two adjacent elements for transmitting both, push and pull forces from one element to another via a flexible element.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF THE DRAWINGS

The following is a description of the examples depicted in the accompanying drawings. The figures are not necessarily to scale, and certain features and certain views of the figures may be shown exaggerated in scale or in schematic in the interest of clarity or conciseness.
- Fig. 1: shows a lateral view in a partial cross section of an exemplary injection molding apparatus according to an embodiment;
- Fig. 2a: shows a lateral partial cross section of another exemplary embodiment including a vertical rod, valve pin, force transmission components, and nozzle tip;
- Fig. 2b: shows a top plan view of the embodiment of Fig. 2a;
- Fig. 2c: shows an enlarged view of a portion of the embodiment of Fig. 2a;
- Fig. 2d: shows a perspective view of part of the embodiment of Fig. 2a;
- Fig. 3a: shows a lateral partial cross section of another exemplary embodiment including a vertical rod, valve pin, force transmission components, and nozzle tip;
- Fig. 3b: shows an enlarged view of a portion of the embodiment of Fig. 3a;
- Fig. 3c: shows a perspective view of part of the embodiment of Fig. 3a;
- Fig. 4: shows a perspective view in a partial cross section of an exemplary embodiment including a vertical rod, cable, valve pin, force transmission components, and nozzle tip;
- Fig. 5: shows a partial cross section of another exemplary embodiment including a vertical rod, valve pin, force transmission components, and nozzle tip;
- Fig. 6: shows a lateral partial cross section of another exemplary embodiment including a vertical rod, valve pin, force transmission components, and nozzle tip;
- Fig. 7: shows a lateral partial cross section of another exemplary embodiment including a vertical rod, valve pin, force transmission components, and nozzle tip;
- Fig. 8 appended: shows a lateral partial cross section of an embodiment in accordance with the invention as defined in the claims, this embodiment including a vertical rod, valve pin, force transmission components, and nozzle tip and
- Fig. 9: shows a lateral partial cross section of another exemplary embodiment including a vertical rod, valve pin, cable, force transmission components, and nozzle tip.

The foregoing summary, as well as the following detailed description of certain inventive techniques, will be better understood when read in conjunction with the figures. It should be understood that the claims are not limited to the exemplary arrangements and instrumentality shown in the figures. Furthermore, the appearance shown in the figures is one of many ornamental appearances that can be employed to achieve the stated functions of the apparatus.

### DETAILED DESCRIPTION

In the following detailed description, specific details may be set forth in order to provide a thorough understanding of embodiments of the present invention. However, it will be clear to one skilled in the art when embodiments of the present invention may be practiced without some or all of these specific details. In other instances, well-known features or processes may not be described in detail so as not to unnecessarily obscure the invention. In addition, like or identical reference numerals may be used to identify common or similar elements.

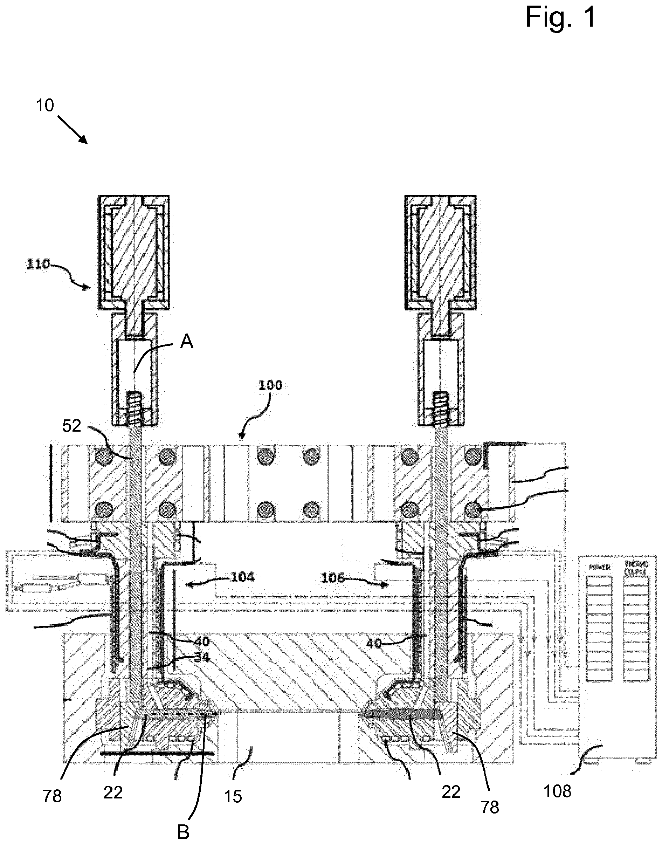

Fig. 1 shows an example of an injection molding apparatus 10 (in part) having a manifold 100. The injection molding apparatus 10 may comprise a hot runner plate. The injection molding apparatus comprises manifold including an inlet and plurality of outlets. The hot runner nozzles 104, 106 are coupled to the manifold, where each nozzle 104, 106 defines a melt channel 40 and where each nozzle 104, 106 includes a movable valve pin 22 configured to control a flow of a molten material form each nozzle 104, 106 into a mold cavity by opening and closing a mold gate; and an actuation system 110 including an actuator 52 which creates a movement along a first axis "A", a valve pin 22 which is moveable along a second axis "B" wherein the second axis "B" is angled with respect to the first axis "A". Optionally, the actuation system 110 may be electrical or pneumatic. Each hot runner nozzle 104, 106 may have a movable valve pin 22, which may be connected to a movable vertical rod 52 via a linkage 78. The linkage 78 may have a triangular or trapezoidal shape. Moving the vertical rod 52 up and down may drive the linkage 78 up and down, which in turn may drive the valve pin 22 horizontally to open and close. When the valve pin 22 is open, melt may enter a mold cavity 15. This actuation system 110 may incorporate springs to ensure that the components move as desired. Optionally, the injection molding apparatus may include one or more heaters, which may optionally be controlled by a hot runner control panel 108.

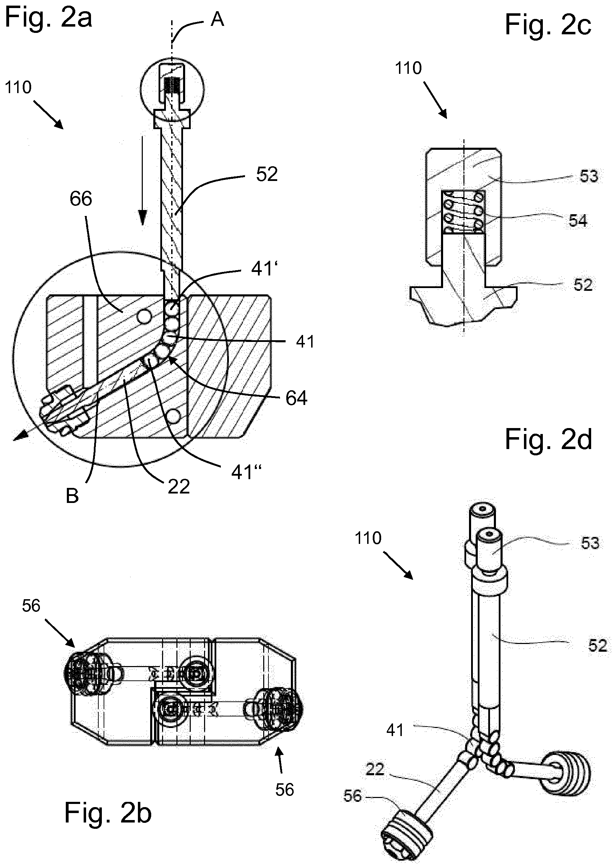

Another exemplary embodiment is shown in Figs. 2a-2d. The actuation system 110 comprises a plurality of force transmission components 41, wherein the force transmission components 41 are movably connected to each other, wherein the first force transmission component 41' is connected to the actuator 52 and the last force transmission component 41" is connected to the moveable valve pin 22 and the force transmission components 41 are substantially located and guided within an area of the channel 64, which is substantially not parallel to axis "A" or axis "B". In this embodiment, the channel 64 is curved with a substantially constant radius of curvature. There is no (or minimal) friction between vertical rod 52 and valve pin 22 because they are connected via force transmission components 41. This lack of friction may provide certain advantages over the embodiment shown in Fig. 1, such as less wear on the moving elements, such as on the vertical rod 52 and the valve pin 22. In this embodiment, vertical movement of the vertical rod 52 is transmitted to the valve pin 22 via the force transmission components 41. As shown in Figs. 2a and 2d, a plurality of force transmission components 41 are guided inside the channel 64 of the nozzle head 66. The force transmission components 41 connect the valve pin 22 to the vertical rod 52. The second force transmission component 41" may be solidly attached to the valve pin 22. A high force may be needed to push the valve pin 22 towards the mold cavity 15. By moving the vertical rod 52 in a downwards direction, the force transmission components 41 transmit a closing movement to the valve pin 22 (applying a compression force onto the valve pin 22). A similar force in the opposite direction may be required to pull the valve pin 22 back away from the mold cavity. By moving the vertical rod 52 in an upwards direction, the connected force transmission components 41 pull back on the valve pin 22 (applying a traction force onto the valve pin 22) causing the valve pin 22 to retract in an opening movement to one or more position(s).

As shown in Fig. 2a, the force transmission components 41 may be cylindrical in shape. If so, the force transmission components 41 may be referred to as micro-cylinders. The force transmission components 41 may be located within a channel 64, which may be curved. Because the vertical rod 52 and the valve pin 22 may be non-compressible and non-stretchable, the force transmission components 41 may create a non-compressible and non-stretchable connection that is also bendable or flexible to allow the transmission of force between the rod 52 and the valve pins 22 inside a nozzle head 66. There is no need for a tight tolerance between the channel and diameter of the force transmission components 41. Some play is allowed to limit potential wear. By having a non-expandable and non-stretchable flexible connection, the length of the vertical rod- force transmission components-valve pin apparatus may remain constant. This provides a constant length during the movement of the vertical rod 52 to open or close the valve gate. The valve pins 22 may each be positioned with high precision via the non-compressible linkage provided by the force transmission components 41.

As shown in Fig. 2b, the vertical rods 52 may be laterally shifted to save space. Saving space can be important in the design of an injection molding apparatus. In an embodiment where the vertical rods 52 are laterally shifted, the nozzle tips 56 and the mold gate cavities 15 may also be shifted and aligned. In alternative embodiments, the nozzle tips 56 and the mold gate cavities are not shifted (but still aligned).

As shown in Fig. 2c, the actuation system 110 may include a spring 54 between an actuator 53 and the vertical rod 52. The spring 54 may act as a suspension to protect the mold gate and other parts caused by any blockage or thermal expansion of the valve pins 22 or vertical rods 52.

Fig. 2d shows a perspective view of part of the embodiment of Fig. 2a, in particular of the actuation system 110.

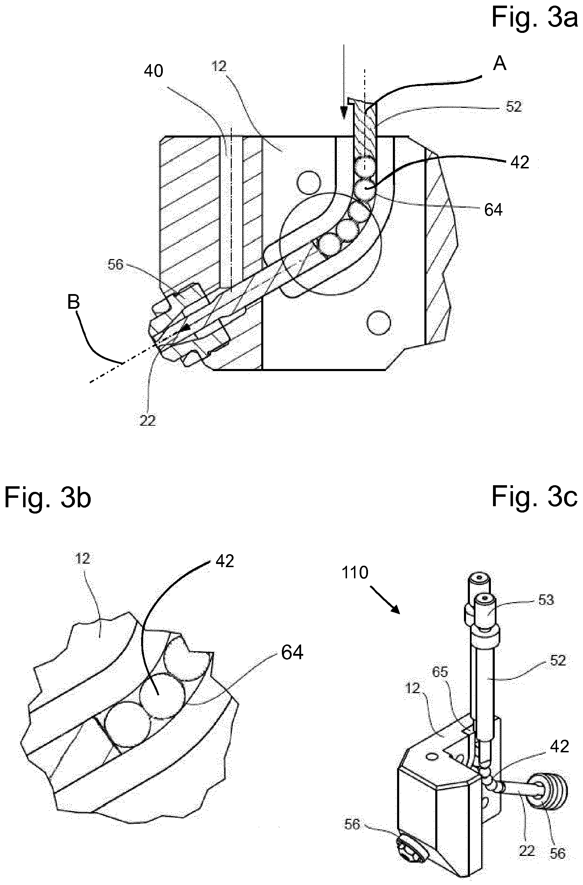

Another embodiment is shown in Figs. 3a-3c. This embodiment is similar to the embodiment shown in Figs. 2a-2d, but in this embodiment the plurality of force transmission components 42 may be spherical in shape. If so, the force transmission components 42 may be referred to as micro-spheres. The force transmission components 42 may be located within a channel 64, which may be curved. The use of spherical force transmission components 42 may reduce the friction inside the channel 64. Similar to above, by moving the vertical rod 52 in a downward direction, the force transmission components 42 transmit a closing movement to the valve pin 22 (applying a compression force onto the valve pin 22). By moving the vertical rod 52 in an upwards direction, the force transmission components pull back on the valve pin 22 to retract in an opening movement to one or more position(s). The apparatus may be housed within one or more plates 12.

Fig. 3b shows an enlarged view of the marked portion in Fig. 3a and Fig. 3c shows a perspective view of part of the embodiment of Fig. 3a, in particular of the actuation system 110.

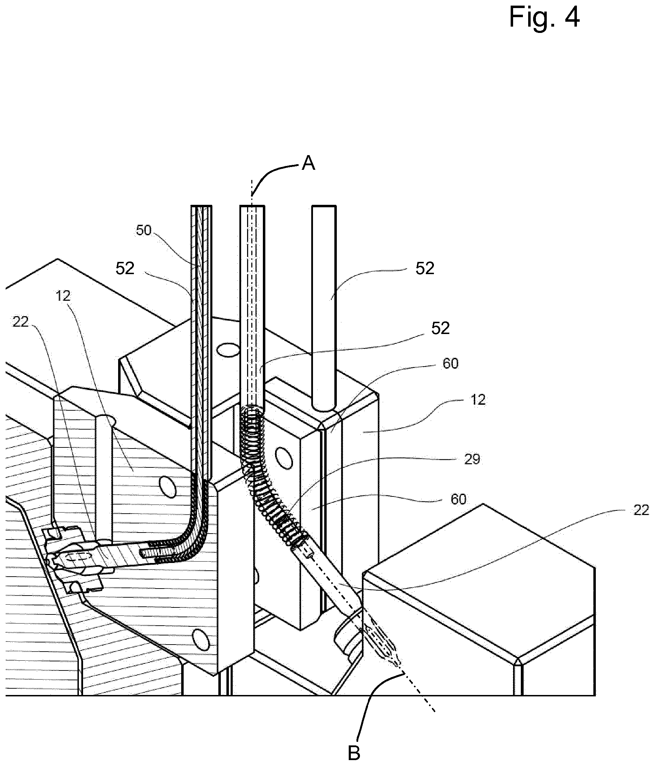

Another embodiment is shown in Fig. 4. In this embodiment, the force transmission components are replaced by one or more coiled springs 29. The one or more coiled springs 29 limit the bending of a cable 50 which is retained within one or more coiled springs 29 and connects the vertical rod 52 with the valve pin 22. The one or more coiled springs 29 may have high resistance to compression (and may thus be nearly non-compressible). Similarly, the one or more coiled springs 29 may have high resistance to stretching (and may thus be nearly non-stretchable). Similar to above, by moving the vertical rod 52 in a downward direction, the one or more coiled springs 29 transmit a closing movement to the valve pin 22 (applying a compression force onto the valve pin 22). By moving the vertical rod 52 in an upwards direction, the cable 50 pulls back on the valve pin 22 (applying a traction force onto the valve pin 22) causing the valve pin 22 to retract in an opening movement to one or more position(s). The apparatus may be housed within one or more plates 12, 60.

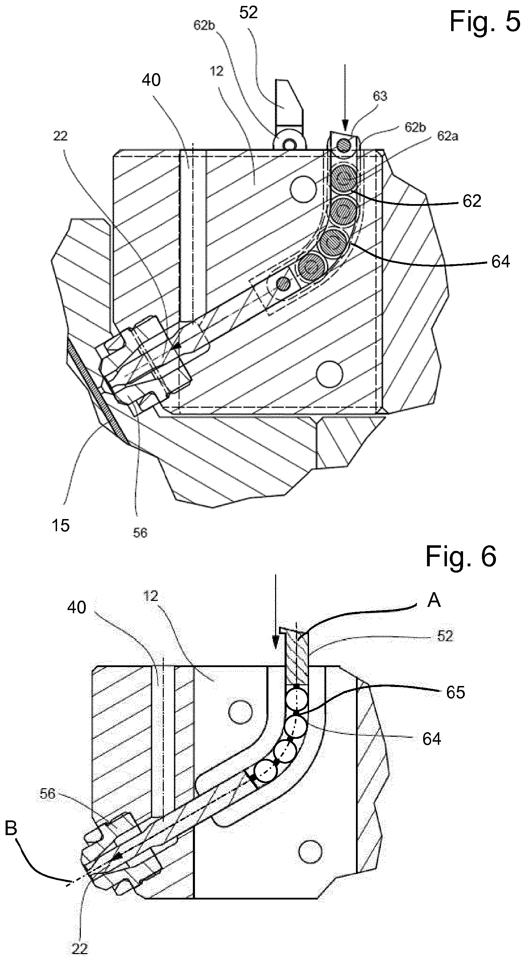

Another embodiment is shown in Fig 5. In this embodiment, the force transmission components are provided by a roller chain 62. The valve pin 22 may be connected to the vertical rod 52 via a chain connection 63. To provide a similar function to the force transmission components described in the embodiments above, the roller chain 62 may include a series of pins 62a and associated bushings 62b. Similar above, by moving the vertical rod 52 in a downwards direction, the chain connection 63 and roller chain 62 (including the pins 62a and bushings 62b) transmit a closing movement to the valve pin 22 (applying a compression force onto the valve pin 22). By moving the vertical rod 52 in an upwards direction, the vertical rod 52 pulls back on the chain connection 63 (applying a traction force onto the valve pin 22 via chain) causing the valve pin 22 to retract in an opening movement to one or more position(s). By carefully controlling the opening and closing of the valve pin 22, melt can be selectively allowed to enter a mold cavity 15 via melt channel 40.

Another embodiment is shown in Fig 6. In this embodiment, similar to the embodiment of Fig. 5, the force transmission components are configured as ball chain 65. Equally to Fig. 5, by moving the vertical rod 52 in a downwards direction, the ball chain 65 transmits a closing movement to the valve pin 22. By moving the vertical rod 52 in an upwards direction, the vertical rod 52 pulls back on the chain connection causing the valve pin 22 to retract in an opening movement to one or more position(s). By carefully controlling the opening and closing of the valve pin 22, melt can be selectively allowed to enter a mold cavity 15 via melt channel 40.

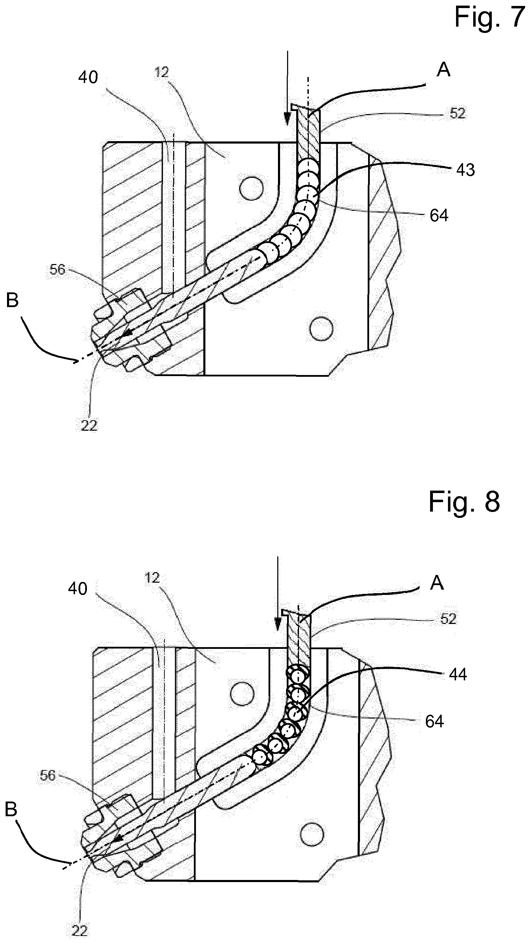

Another embodiment is shown in Fig 7. This embodiment is similar to the embodiments shown in Figs. 2 and 3, but in this embodiment the contact surface of the force transmission components 43 is increased by using a concave geometry on a first force transmission component 43 touching a convex geometry on a second force transmission component 43. In addition to the embodiments shown in Figs. 2 and/ or 3, by moving the vertical rod 52 in a downward direction, the force transmission components 43 transmit a closing movement via an increased contact surface to the valve pin 22. By moving the vertical rod 52 in an upwards direction, the connected force transmission components 43 pull back the valve pin 22 to retract in an opening movement to one or more position(s).

An embodiment in accordance with the invention as defined in the appended claims i is shown in Fig 8. This embodiment is similar to the embodiments shown in Figs. 2 and 7, but in this embodiment the force transmission components 44 are configured as ball head connection. Similar to the embodiment of Fig. 7, the contact surface of the force transmission components 44 is increased and pull forces are transmitted via form fit (positive fit). In the same way, by moving the vertical rod 52 in an upwards direction, the connected force transmission components 44 pull back the valve pin 22 to retract in an opening movement to one or more position(s).

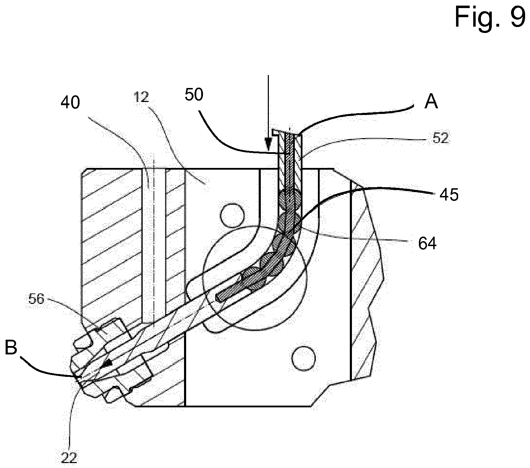

Another embodiment is shown in Fig. 9. In this embodiment, a cable 50 passes through an internal portion of the force transmission components 45. The force transmission components 45 may be cylindrical in shape. The force transmission components 45 are located within a channel, which may be curved. Because the vertical rod 52 and the valve pin 22 may be non-compressible and non-stretchable, the force transmission components 45 may create a non-compressible and non-stretchable connection that is also bendable or flexible to allow the transmission of force between the rod 52 and the valve pins 22 inside a nozzle tip 56. In this embodiment, there is no need for a tight tolerance between the channel and diameter of the force transmission components 45. Some play is allowed to limit potential wear. The force transmission components 45 prevent the cable 50 from bending and potentially becoming stuck in the channel. By having a non-expandable and non-stretchable flexible connection, the length of the vertical rod- force transmission component-valve pin apparatus may remain constant. This provides a constant length during the movement of the vertical rod 52 to open or close the valve gate. The valve pins 22 may each be positioned with high precision via the non-compressible linkage provided by the apparatus of the cable 50 and the force transmission components 45.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

### LIST OF REFERENCE CHARACTERS

- 10: Hot runner injection molding apparatus
- 12: Plate
- 15: Mold cavity
- 22: Valve pin
- 29: Coiled spring
- 40: Melt channel
- 41, 42, 43, 44, 45: Force transmission component(s)
- 50: Cable
- 52: Vertical rod
- 53: Actuator
- 54: Spring
- 56: Nozzle tip
- 60: Plate
- 62: Roller chain
- 62a: Pin
- 62b: Bushing
- 63: Chain connection
- 64: Channel
- 65: Ball chain
- 66: Nozzle head
- 78: Linkage
- 100: Manifold
- 104: Hot runner nozzle
- 106: Hot runner nozzle
- 108: Hot runner control panel
- 110: Actuation system

## Claims

1. A hot runner injection molding apparatus (10) comprising:
a manifold (100) including an inlet and plurality of outlets;
at least one hot runner nozzle (104, 106) coupled to the manifold (100), where each nozzle (104, 106) defines a melt channel (40) and where each nozzle (104, 106) includes a movable valve pin (22) configured to control a flow of a molten material from each nozzle (104, 106) into a mold cavity (15) by opening and closing a mold gate; and
an actuation system (110) including:
- an actuator (52) which creates a movement along a first axis "A",
- a valve pin (22) which is moveable along a second axis "B" wherein the second axis "B" is angled with respect to the first axis "A",
- a plurality of force transmission components (41, 42, 43, 44), wherein the force transmission components (41, 42, 43, 44) are movably connected to each other, wherein the first force transmission component (41') is connected to the actuator (52) and the last force transmission component (41") is connected to the moveable valve pin (22) and the force transmission components 41, 42, 43, 44) are substantially located and guided within an area of the channel (64), which is substantially not parallel to axis A or axis "B", **characterised in that** the force transmission components (44) are connected via ball head connection.

2. The hot runner injection molding apparatus according to claim 1, wherein the area of the channel (64), which is substantially not parallel to axis A or axis B, is substantially the whole channel (64).

3. The hot runner injection molding apparatus according to at least one of the proceeding claims, wherein the force transmission components (41, 42, 43, 44) translate the actuator force to the valve pin (22).

4. The hot runner injection molding apparatus according to at least one of the proceeding claims, wherein the force transmission components (41, 42, 43, 44) translate the actuator force to move the valve pin (22) in a first direction to open a mold gate to allow the molten material flowing into the mold cavity (15).

5. The hot runner injection molding apparatus according to at least one of the proceeding claims, wherein the force transmission components (41, 42, 43, 44) translate the actuator force to move the valve pin (22) in a second direction opposite to the first direction to close a mold gate to stop molten material flowing into the mold cavity (15).

6. The hot runner injection molding apparatus according to at least one of the proceeding claims, wherein the force transmission components (41, 42, 43, 44) translate the actuator force to move the valve pin (22) in a position between the open and closed position.

7. The hot runner injection molding apparatus according to at least one of the proceeding claims, wherein the overall length of the movably connected force transmission components (41, 42, 43, 44) is substantially constant in all operating positions of the valve pin (22) and/ or in all operating positions of the actuator (52).

8. The hot runner injection molding apparatus according to at least one of the proceeding claims, wherein the movably connected force transmission components (41, 42, 43, 44) are non-compressible in the moving direction.

9. The hot runner injection molding apparatus according to at least one of the proceeding claims, wherein the movably connected force transmission components (41, 42, 43, 44) are non-stretchable in the moving direction.

10. The hot runner injection molding apparatus according to at least one of the proceeding claims, wherein the contact surface of the force transmission components (43, 44) is increased by using a concave geometry on a first force transmission component (43, 44) touching a convex geometry on a second force transmission component (43, 44).

## Patentansprüche

1. Eine Heißkanal-Spritzgießvorrichtung (10), aufweisend:
einen Verteiler (100) mit einem Einlass und einer Vielzahl von Auslässen;
wenigstens einer Heißkanaldüse (104, 106), die mit dem Verteiler (100) verbunden ist, wobei jede Düse (104, 106) einen Schmelzekanal (40) definiert und wobei jede Düse (104, 106) eine bewegliche Ventilnadel (22) aufweist, die konfiguriert ist, einen Fluss eines geschmolzenen Materials aus jeder Düse (104, 106) in einen Formhohlraum (15) durch Öffnen und Schließen eines Formanschnitts zu steuern; und
ein Betätigungssystem (110) aufweisend:
- einen Aktuator (52), der eine Bewegung entlang einer ersten Achse "A" erzeugt,
- eine Ventilnadel (22), die entlang einer zweiten Achse "B" beweglich ist, wobei die zweite Achse "B" in Bezug auf die erste Achse "A" angewinkelt ist,
- eine Vielzahl von Kraftübertragungskomponenten (41, 42, 43, 44), wobei die Kraftübertragungskomponenten (41, 42, 43, 44) beweglich miteinander verbunden sind, wobei die erste Kraftübertragungskomponente (41') mit dem Aktuator (52) und die letzte Kraftübertragungskomponente (41") mit der beweglichen Ventilnadel (22) verbunden ist, und die Kraftübertragungskomponenten (41, 42, 43, 44) im Wesentlichen in einem Bereich des Kanals (64) angeordnet und geführt sind, der im Wesentlichen nicht parallel zur Achse A oder Achse "B" ist, **dadurch gekennzeichnet, dass** die Kraftübertragungskomponenten (44) über eine Kugelkopfverbindung verbunden sind.

2. Die Heißkanal-Spritzgießvorrichtung gemäß Anspruch 1, wobei der Bereich des Kanals (64), der im Wesentlichen nicht parallel zur Achse A oder Achse B ist, im Wesentlichen der gesamte Kanal (64) ist.

3. Die Heißkanal-Spritzgießvorrichtung gemäß wenigstens einem der vorhergehenden Ansprüche, wobei die Kraftübertragungskomponenten (41, 42, 43, 44) die Betätigungskraft auf die Ventilnadel (22) übertragen.

4. Die Heißkanal-Spritzgießvorrichtung gemäß wenigstens einem der vorhergehenden Ansprüche, wobei die Kraftübertragungskomponenten (41, 42, 43, 44) die Betätigungskraft übertragen, um die Ventilnadel (22) in eine erste Richtung zu bewegen, um einen Formanschnitt zu öffnen, damit das geschmolzene Material in den Formhohlraum (15) fließen kann.

5. Die Heißkanal-Spritzgießvorrichtung gemäß wenigstens einem der vorhergehenden Ansprüche, wobei die Kraftübertragungskomponenten (41, 42, 43, 44) die Betätigungskraft übertragen, um die Ventilnadel (22) in eine zweite Richtung entgegengesetzt zur ersten Richtung zu bewegen, um einen Formanschnitt zu schließen, um zu verhindern, dass geschmolzenes Material in den Formhohlraum (15) fließt.

6. Die Heißkanal-Spritzgießvorrichtung gemäß wenigstens einem der vorhergehenden Ansprüche, wobei die Kraftübertragungskomponenten (41, 42, 43, 44) die Betätigungskraft übertragen, um die Ventilnadel (22) in eine Position zwischen einer offenen und geschlossenen Position zu bewegen.

7. Die Heißkanal-Spritzgießvorrichtung gemäß wenigstens einem der vorhergehenden Ansprüche, wobei die Gesamtlänge der beweglich verbundenen Kraftübertragungskomponenten (41, 42, 43, 44) in allen Betriebsstellungen der Ventilnadel (22) und/ oder in allen Betriebsstellungen des Aktuators (52) im Wesentlichen konstant ist.

8. Die Heißkanal-Spritzgießvorrichtung gemäß wenigstens einem der vorhergehenden Ansprüche, wobei die beweglich verbundenen Kraftübertragungskomponenten (41, 42, 43, 44) in der Bewegungsrichtung nicht komprimierbar sind.

9. Die Heißkanal-Spritzgießvorrichtung gemäß wenigstens einem der vorhergehenden Ansprüche, wobei die beweglich verbundenen Kraftübertragungskomponenten (41, 42, 43, 44) in der Bewegungsrichtung nicht dehnbar sind.

10. Die Heißkanal-Spritzgießvorrichtung gemäß wenigstens einem der vorhergehenden Ansprüche, wobei die Kontaktfläche der Kraftübertragungskomponenten (43, 44) vergrößert wird, indem eine konkave Geometrie an einer ersten Kraftübertragungskomponente (43, 44) eingesetzt wird, die eine konvexe Geometrie an einer zweiten Kraftübertragungskomponente (43, 44) berührt.

## Revendications

1. Appareil de moulage par injection (10) avec canaux chauffés, comprenant :
un collecteur (100) incluant une entrée et une pluralité de sorties ;
au moins une buse à canal chauffé (104, 116) couplée au collecteur (100), de sorte que chaque buse (104, 116) définit un canal de fusion (40) et que chaque buse (104, 106) inclut un pointeau de valve mobile (22) configuré pour commander un écoulement d'un matériau en fusion depuis chaque buse (104, 116) jusque dans la cavité d'un moule (15) en ouvrant et en fermant une porte du moule ; et
un système d'actionnement (110) incluant :
- un actionneur (52) qui crée un mouvement le long d'un premier axe "A",
- un pointeau de valve (22) qui est déplaçable le long d'un second axe "B", ledit second axe "B" étant sous un angle par rapport au premier axe "A",
- une pluralité de composants de transmission de force (41, 42, 43, 44), lesdits composants de transmission de force (41, 42, 43, 44) étant connectés de façon déplaçable les uns aux autres, dans lequel le premier composant de transmission de force (41') est connecté à l'actionneur (52) et le dernier composant de transmission de force (41") est connecté au pointeau de valve mobile (22), et les composants de transmission de force (41, 42, 43, 44) sont sensiblement situés et guidés à l'intérieur d'une zone du canal (64) qui est sensiblement non parallèle à l'axe A ou à l'axe B,
**caractérisé en ce que**
les composants de transmission de force (44) sont connectés via une connexion à tête sphérique.

2. Appareil de moulage par injection avec canaux chauffés selon la revendication 1, dans lequel la zone du canal (64) qui est sensiblement non parallèle à l'axe A ou à l'axe B, concerne sensiblement la totalité du canal (64).

3. Appareil de moulage par injection avec canaux chauffés selon l'une au moins des revendications précédentes, dans lequel les composants de transmission de force (41, 42, 43, 44) assurent une translation de la force d'actionnement sur le pointeau de valve (22).

4. Appareil de moulage par injection avec canaux chauffés selon l'une au moins des revendications précédentes, dans lequel les composants de transmission de force (41, 42, 43, 44) assurent une translation de la force d'actionnement afin de déplacer le pointeau de valve (22) dans une première direction pour ouvrir une porte du moule afin de permettre au matériau en fusion de s'écouler jusque dans la cavité du moule (15).

5. Appareil de moulage par injection avec canaux chauffés selon l'une au moins des revendications précédentes, dans lequel les composants de transmission de force (41, 42, 43, 44) assurent une translation de la force d'actionnement afin de déplacer le pointeau de valve (22) dans une seconde direction opposée à la première direction pour fermer une porte du moule et arrêter l'écoulement du matériau en fusion jusque dans la cavité du moule (15).

6. Appareil de moulage par injection avec canaux chauffés selon l'une au moins des revendications précédentes, dans lequel les composants de transmission de force (41, 42, 43, 44) assurent une translation de la force d'actionnement afin de déplacer le pointeau de valve (22) dans une position entre la position ouverte et la position fermée.

7. Appareil de moulage par injection avec canaux chauffés selon l'une au moins des revendications précédentes, dans lequel la longueur totale des composants de transmission de force connectés de façon déplaçable (41, 42, 43, 44) est sensiblement constante dans toutes les positions de fonctionnement du pointeau de valve (22) et/ou dans toutes les positions de fonctionnement de l'actionneur (52).

8. Appareil de moulage par injection avec canaux chauffés selon l'une au moins des revendications précédentes, dans lequel les composants de transmission de force connectés de façon déplaçable (41, 42, 43, 44) sont non compressibles dans la direction de déplacement.

9. Appareil de moulage par injection avec canaux chauffés selon l'une au moins des revendications précédentes, dans lequel les composants de transmission de force connectés de façon déplaçable (41, 42, 43, 44) sont non étirables dans la direction de déplacement.

10. Appareil de moulage par injection avec canaux chauffés selon l'une au moins des revendications précédentes, dans lequel la surface de contact des composants de transmission de force (43, 44) est augmentée en utilisant une géométrie concave sur un premier composant de transmission de force (43, 44) qui touche une géométrie convexe sur un second composant de transmission de force (43, 44).
